# EUROPEAN PATENT SPECIFICATION

(11) **EP 4 187 459 B1**
(45) Date of publication and mention of the grant of the patent: **21.10.2026**
(21) Application number: 21845537.6
(22) Date of filing: 10.05.2021
(51) Int. Cl.: G06Q 10/08

(54) **METHOD FOR MONITORING CIRCULATION PROCESS OF HEAT INSULATION UNIT AND RELATED APPARATUS, ELECTRIC DEVICE AND COMPUTER READABLE MEDIUM**
VERFAHREN ZUR ÜBERWACHUNG DES ZIRKULATIONSPROZESSES EINER WÄRMEDÄMMUNGSEINHEIT SOWIE ZUGEHÖRIGE VORRICHTUNG, ELEKTRISCHE EINRICHTUNG UND COMPUTERLESBARES MEDIUM
PROCÉDÉ DE SURVEILLANCE DU PROCESSUS DE CIRCULATION D'UNE UNITÉ D'ISOLATION THERMIQUE AINSI QU'APPAREIL, DISPOSITIF ÉLECTRIQUE ET SUPPORT LISIBLE PAR ORDINATEUR ASSOCIÉS

(30) Priority: 23.07.2020 CN 202010717670
(43) Date of publication of application: 31.05.2023
(73) Proprietor: BEIJING JINGDONG ZHENSHI INFORMATION TECHNOLOGY CO., LTD., Beijing, Beijing 100086 (CN)
(72) Inventor: YANG, Wenxiang, Beijing 100086 (CN); MA, Huijuan, Beijing 100086 (CN)
(74) Representative: Müller-Boré & Partner Patentanwälte PartG mbB
(86) International application number: PCT/CN2021/092576
(87) International publication number: WO 2022/016960

(56) References cited:
- CN-A- 104 574 027
- CN-A- 107 464 081
- CN-A- 110 568 877
- CN-A- 111 429 049
- CN-A- 111 861 334
- CN-U- 209 814 884
- US-A1- 2002 111 819
- US-A1- 2016 342 938
- US-A1- 2019 309 971

## Description

### TECHNICAL FIELD

The present disclosure relates to the technical field of informatization cold chain logistics and transport, and specifically relates to a method for monitoring a circulation process of a heat insulation unit, an apparatus for monitoring a circulation process of a heat insulation unit, an electronic device, and a computer readable medium.

### BACKGROUND

With the rapid development of e-commerce, there are more and more e-commerce orders of fresh commodities, and fresh commodities of different temperature need different fresh-keeping environments. At present, heat insulation boxes are mostly used to guarantee the temperature and humidity of the fresh commodities. Heat insulation boxes that are usually recycled are provided with different quantities of refrigerants therein. However, recyclable heat insulation boxes or internal refrigerants are often lost.

Chinese Utility Model CN209814884U entitled "Cold transportation equipment" discloses cold transportation equipment. The system comprises a refrigerated container and an automatic stereoscopic warehouse, the refrigerated container comprises a container body, refrigeration equipment installed in the container body, a heat preservation layer arranged on the inner side of the container body, a power source arranged in the container body and located outside the heat preservation layer, a temperature control box arranged in the container body and located outside the heat preservation layer, and a charging connecting plug arranged outside the container body and connected with the power source. The power supply is used for supplying power to the refrigeration equipment and the temperature control box; the automatic stereoscopic warehouse comprises a goods shelf which is built by adopting a steel structure, is used for stereoscopic stacking of refrigerated containers and is provided with a charging bayonet socket, wherein the lifting conveying device is arranged on the front portion of the goods shelf and used for lifting and conveying refrigerated containers, the roller way conveyor is arranged at the front end of the lifting conveying device and used for conveying the refrigerated containers, and the electric control system is arranged beside the goods shelf and used for manual operation.

### SUMMARY

The invention is defined in the appended independent claims. Further preferred embodiments are provided in the appended dependent claims.

The method for monitoring a circulation process of a heat insulation unit and the apparatus for monitoring a circulation process of a heat insulation unit provided in embodiments of the present disclosure first acquire original data of the heat insulation unit in an original warehouse, then acquire scanning data of the heat insulation unit at at least one supply site after commodities in an order are added to the heat insulation unit, then acquire intermediate data of the heat insulation unit at at least one distribution site after it is determined that the commodities have been taken out from the heat insulation unit, and finally determine circulation data of the heat insulation unit based on the original data, the scanning data, and the intermediate data. Thus, the original data and the intermediate data of the heat insulation unit may be acquired to check the number of heat insulation units and the quantity of refrigerants in the heat insulation unit in real time; and the circulation data may be acquired to monitor the circulation of the heat insulation unit and the circulation of the refrigerants in the heat insulation unit at each site in real time, thereby realizing online monitoring of the heat insulation unit in the whole process, reducing the loss of heat insulation units and refrigerants in the heat insulation units, and improving the utilization efficiency of the heat insulation unit.

### BRIEF DESCRIPTION OF THE DRAWINGS

After reading detailed descriptions of non-limiting embodiments with reference to the following accompanying drawings, other features, objectives, and advantages of the present disclosure will become more apparent.
Fig. 1 is a flowchart of a method for monitoring a circulation process of a heat insulation unit according to an embodiment of the present disclosure;
Fig. 2 is a flowchart of a method for determining circulation data of a heat insulation unit according to the present disclosure;
Fig. 3 is a flowchart of a method for acquiring original data of a heat insulation unit in an original warehouse according to the present disclosure;
Fig. 4 is a flowchart of the method for monitoring a circulation process of a heat insulation unit according to another embodiment of the present disclosure;
Fig. 5 is a flowchart of the method for monitoring a circulation process of a heat insulation unit according to a third embodiment of the present disclosure;
Fig. 6 is a flowchart of the method for monitoring a circulation process of a heat insulation unit according to a fourth embodiment of the present disclosure;
Fig. 7 is a schematic structural diagram of an apparatus for monitoring a circulation process of a heat insulation unit according to an embodiment of the present disclosure;
Fig. 8 is a schematic structural diagram of a weighing and scanning apparatus according to an embodiment of the present disclosure;
Fig. 9 is a flowchart of a weighing and scanning method according to an embodiment of the present disclosure;
Fig. 10 is a schematic structural diagram of an original warehouse according to the present disclosure; and
Fig. 11 is a schematic structural diagram adapted to implementing an electronic device of embodiments of the present disclosure.

### DETAILED DESCRIPTION OF EMBODIMENTS

The present disclosure will be further described in detail below in combination with the accompanying drawings and the embodiments. It should be understood that the specific embodiments described here are merely used for explaining the relevant disclosure, rather than limiting the disclosure. In addition, it should be further noted that, for ease of description, only the portions related to the relevant disclosure are shown in the drawings.

It should be noted that the embodiments in the present disclosure and the features in the embodiments may be combined with each other on a non-conflict basis. The present disclosure will be described in detail below with reference to the drawings and in combination with the embodiments.

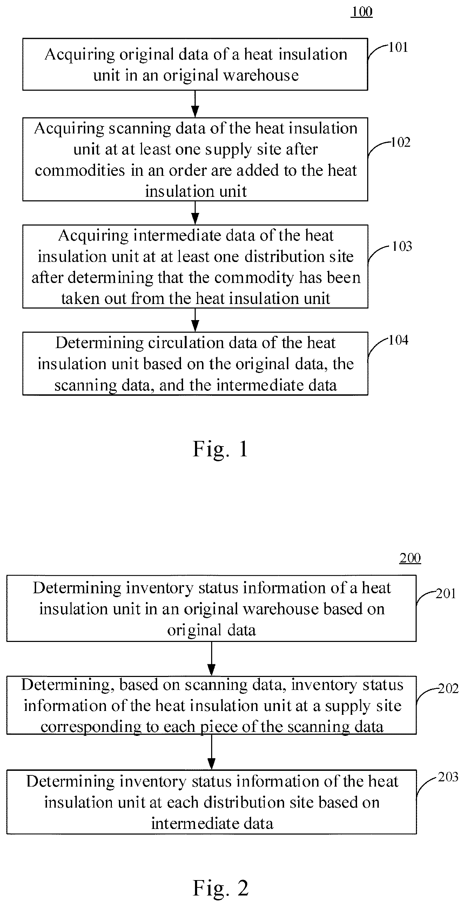

As shown in Fig. 1, Fig. 1 illustrates a process 100 of a method for monitoring a circulation process of a heat insulation unit according to an embodiment of the present disclosure. The method for monitoring a circulation process of a heat insulation unit includes the following steps:
Step 101: acquiring original data of a heat insulation unit in an original warehouse.

The heat insulation unit is a heat insulation box of an additional refrigerant unit, and the original data includes: an original number of refrigerant units and a barcode of the heat insulation box.

In the present embodiment, an executing body on which the method for monitoring a circulation process of a heat insulation unit runs acquires the original data in real time, or acquires the original data from memory. The original data is data that is bound in the original warehouse and is related to attributes of the heat insulation unit. For example, the heat insulation unit is the heat insulation box of the additional refrigerant unit, and the original data is data that is related to the refrigerant unit and attributes of the heat insulation box, respectively.

Further, in the present embodiment, the original data includes: the original number of the refrigerant units and the barcode of the heat insulation box, where the barcode of the heat insulation box is a code used to identify the heat insulation box after the heat insulation box leaves its factory, and the code is also the only constant code in the circulation process of the heat insulation unit. After the code is bound to specifications of the heat insulation box, and after the barcode of the heat insulation box is identified, the specifications of the heat insulation box may be obtained. The specifications include: attributes, such as length, width, height, and weight, of the heat insulation box. The original number of the refrigerant units may be number of the refrigerant units acquired by the executing body in real time or autonomously inputted by an operator.

In the present embodiment, the refrigerant unit is a medium arranged in the heat insulation box, and the temperature and humidity in the heat insulation box may be adjusted by the refrigerant unit, to guarantee the freshness of fresh commodities in the heat insulation box. In the present embodiment, the refrigerant unit may include: a disposable refrigerant unit and a recyclable refrigerant unit, where the disposable refrigerant unit is used for a limited number of times, is not required to return to the warehouse after a fresh commodity is delivered to a customer, and includes: an ice bag or dry ice; while the recyclable refrigerant unit may be reused by repeated refrigeration of a refrigerating device, is required to return to the warehouse after a fresh commodity is delivered to a customer, and includes: a refrigerated ice plate and a frozen ice plate, the difference between which lies in the cooling capacity contained in each of them, where a cold preserving duration when using a refrigerated ice plate is less than that when using a frozen ice plate.

According to the fresh-keeping requirements for different fresh commodities, a disposable refrigerant unit may be selected as the refrigerant unit in the present embodiment, or a recyclable refrigerant unit may be selected as the refrigerant unit in the present embodiment, or both a disposable refrigerant unit and a recyclable refrigerant unit are used as the refrigerant units in the present embodiment.

Step 102: acquiring scanning data of the heat insulation unit at at least one supply site after commodities in an order are added to the heat insulation unit.

The supply site is determined based on the order and is bound to an ID of a supply scanning device, and the scanning data includes: the barcode of the heat insulation box and the ID of the supply scanning device.

In the present embodiment, in the process of adding the commodities in the order into the heat insulation unit, the operator scans barcodes of all commodities in the order (order container No. or commodity barcodes), scans the barcode of the heat insulation box, binds all commodities in the order to the barcode of the heat insulation unit, and may, for a special deep-frozen commodity, take out an appropriate amount of special refrigerant (e.g., a dry ice bag) from a special refrigerant container arranged near a packing workbench, and put the special refrigerant into the heat insulation box. In the present embodiment, the commodities in the order may be determined to have been added into the heat insulation unit based on binding information between the commodity in the order and the barcode of the heat insulation box.

Further, after the commodities in the order have been added into the heat insulation box of the heat insulation unit, the heat insulation box is sealed, and then an order sheet is printed and pasted on an outer surface of the heat insulation box. The supply site is a site of the commodity provided by the original warehouse to the customer. The supply site may be a sorting center of heat insulation units, or may be an inspection site. In the sorting center of heat insulation units, a sorting operator sorts heat insulation units to a temporary container for delivery in a corresponding road direction based on address information on order sheets, loads heat insulation units in different road directions to corresponding vehicles after completing the sorting, and transports the heat insulation units by the vehicles, thereby transporting the heat insulation units to destination inspection sites, such that operators at the inspection sites scan the order sheets or the barcodes of the heat insulation boxes for site inspection. Each supply site may be determined based on the order. For example, supply sites for a fresh commodity include: Shanghai and Tianjin. Each supply site is provided with a supply scanning device, the ID of the supply scanning device is a unique identifier for identifying the supply scanning device, and there is a corresponding relationship between an address of the supply site and the ID of the supply scanning device. Because the scanning data includes: the barcode of the heat insulation box and the ID of the supply scanning device, the supply site corresponding to the ID of the supply scanning device may be determined after acquiring the scanning data.

Step 103: acquiring intermediate data of the heat insulation unit at at least one distribution site after determining that the commodity has been taken out from the heat insulation unit.

The distribution site is determined according to a preset scheduling rule, and the intermediate data includes: an intermediate number of the refrigerant units, an ID of a delivery scanning device, and the barcode of the heat insulation box.

In the present embodiment, a deliveryman (opens the heat insulation box before the customer, and takes out the commodities inside) delivers the order to the customer, and scans the order sheet under a "proper delivery" function of the delivery system to complete the delivery of the commodities in the order. Then, the deliveryman returns the heat insulation unit to the distribution site, cleans wastes in the heat insulation box (e.g., the disposable refrigerant unit of a dry ice bag), and guarantees that the recyclable refrigerant unit in the heat insulation unit is always in the heat insulation box.

In the present embodiment, the distribution site is a site for recycling the heat insulation unit. Each supply site is provided with a delivery scanning device, an ID of the delivery scanning device is a unique identifier for identifying the delivery scanning device, and there is a corresponding relationship between an address of the distribution site and the ID of the delivery scanning device. Because the intermediate data includes: the barcode of the heat insulation box and the ID of the delivery scanning device, the distribution site corresponding to the ID of the delivery scanning device may be determined after acquiring the intermediate data. The distribution site may be determined according to a preset scheduling rule, and specifically, different distribution sites through which a delivery vehicle passes are determined according to the preset scheduling rule.

For example, the preset scheduling rule includes: acquiring a historical number of heat insulation units at each distribution site, dispatching a corresponding vehicle for each distribution site based on the historical number of heat insulation units at each distribution site, and making different routes for different vehicles.

In some alternative implementations of the present embodiment, the preset scheduling rule includes: dispatching a corresponding vehicle for each distribution site, and making different routes for different vehicles based on the number of heat insulation units and the specifications of the heat insulation box at each distribution site. In the present alternative implementation, the number of heat insulation boxes at each distribution site may be checked in real time. A dispatcher statisticizes the number of the heat insulation units and the specifications of the heat insulation box (for example, the length, width, height, and weight of the heat insulation box), requests a vehicle dispatching system to dispatch a corresponding vehicle, and makes a corresponding route (distribution site A-distribution site B-distribution site C-...distribution site J-destination warehouse) for the vehicle. At each distribution site, the barcode of the heat insulation box will be scanned, and the heat insulation box will be loaded on a delivery vehicle, until the heat insulation boxes at all sites are loaded on delivery vehicles.

In the present embodiment, the intermediate number of the refrigerant units is the number of the refrigerant units at each distribution site, and the intermediate number of the refrigerant units may be obtained from the distribution site of the heat insulation unit by, e.g., computation and scanning. Further, a scanning device may be further provided at each distribution site. The scanning device is configured to scan the barcode of the heat insulation box of the heat insulation unit, and bind the barcode of the heat insulation box to the ID of the supply scanning device, and the ID of the supply scanning device corresponds to the address of the distribution site, so that when the heat insulation unit passes through each distribution site, the intermediate data at the distribution site can be obtained in real time by a scanning device at the distribution site.

Alternatively, the approach of acquiring the intermediate number of the heat insulation units may be same as the approach of acquiring the original number of the heat insulation units. Specifically, the acquiring the intermediate number of the heat insulation units includes: identifying the barcode of the heat insulation box, and determining weight information of the heat insulation box based on the specifications of the heat insulation box corresponding to the barcode; collecting intermediate weight information of the heat insulation unit; and computing a destination number of the refrigerant units in the heat insulation box based on the intermediate weight information of the heat insulation unit and the weight information of the heat insulation box. The intermediate weight information of the heat insulation unit may be collected from a weighing device arranged at the distribution site.

In the present alternative implementation, the vehicle is arranged for the heat insulation box based on the number of heat insulation units and the specifications of the heat insulation box at the distribution site, thereby guaranteeing the smooth transport of the heat insulation unit at each site.

Step 104: determining circulation data of the heat insulation unit based on the original data, the scanning data, and the intermediate data.

The circulation data is turnover data of the heat insulation unit in the circulation process.

In the present embodiment, the original data includes: the original number of the refrigerant units and the barcode of the heat insulation box; the scanning data includes: the barcode of the heat insulation box and the ID of the supply scanning device; and the intermediate data includes: the intermediate number of the refrigerant units, the ID of the delivery scanning device, and the barcode of the heat insulation box.

In the present embodiment, the circulation data is the turnover data of the heat insulation unit in the circulation process, and the turnover data is information related to sites through which the heat insulation unit passes. For example, the turnover data includes: information of the sites through which the heat insulation unit passes. Further, the information of the sites through which the heat insulation unit passes may include: addresses of the sites (supply sites and distribution sites) through which the heat insulation unit passes and the intermediate number of the refrigerant units at each of the sites through which the heat insulation unit passes. Specifically, the original data, the scanning data, and the intermediate data all include the barcode of the heat insulation box, and the scanning data further includes the ID of the supply scanning device. Since the ID of the supply scanning device corresponds to the supply site, addresses of the heat insulation box at each supply site and each distribution site may be obtained based on the scanning data and the intermediate data. The intermediate number of sealed refrigerant units at the supply site remains unchanged; while at the distribution site, the intermediate number of the refrigerant units may be obtained by manually counting or by scanning, weighing, and computing, and the circulating heat insulation units at the distribution site may be further sealed, such that the intermediate number of the refrigerant units is a constant value.

In the present embodiment, the circulation data includes the information of the sites through which the heat insulation unit passes, and the number of the refrigerant units in the heat insulation unit at each site is determined based on the information of the sites through which the heat insulation unit passes. Further, the number of the refrigerant units in the heat insulation unit may be checked, and the loss of heat insulation boxes and refrigerants in the heat insulation boxes may be known about in real time based on the check result.

The method for monitoring a circulation process of a heat insulation unit provided in embodiments of the present disclosure first acquires original data of the heat insulation unit in an original warehouse, then acquires scanning data of the heat insulation unit at at least one supply site after commodities in an order are added to the heat insulation unit, then acquires intermediate data of the heat insulation unit at at least one distribution site after it is determined that the commodities have been taken out from the heat insulation unit, and finally determines circulation data of the heat insulation unit based on the original data, the scanning data, and the intermediate data. Thus, the original data and the intermediate data of the heat insulation unit may be acquired to check the number of heat insulation units and the quantity of refrigerants in the heat insulation unit in real time; and the circulation data may be acquired to monitor the circulation of the heat insulation unit and the circulation of the refrigerant in the heat insulation unit at each site in real time, thereby realizing online monitoring of the heat insulation unit in the whole process, reducing the loss of heat insulation units and refrigerants in the heat insulation units, and improving the utilization efficiency of the heat insulation unit.

In some alternative implementations of the present embodiment, the circulation data includes not only the information of the sites through which the heat insulation unit passes, but also inventory status information of the heat insulation unit in the original warehouse, the supply sites, and the distribution sites, where the inventory status information may include: the inventory number of heat insulation boxes. Alternatively, the inventory status information may further include: ex-warehousing in transit (status of the heat insulation box being delivered from this site to the next site), and warehousing in transit (status of the heat insulation box being delivered from the last site to this site).

Further referring to Fig. 2, a process 200 of a method for determining circulation data of a heat insulation unit according to the present disclosure is shown. The method for determining circulation data of a heat insulation unit includes the following steps:
Step 201: determining inventory status information of a heat insulation unit in an original warehouse based on original data.

In the present alternative implementation, the original data includes: an original number of refrigerant units and a barcode of the heat insulation box. Based on the barcode of the heat insulation box in the original data, the inventory number of heat insulation units in the original warehouse, the number of heat insulation units that are being delivered, and the number of heat insulation units that have been delivered may be determined.

Step 202: determining, based on scanning data, inventory status information of the heat insulation unit at a supply site corresponding to each piece of the scanning data.

In the present alternative implementation, the scanning data includes: the barcode of the heat insulation box and an ID of a supply scanning device. Based on the scanning data, a current number of inventory heat insulation units at the supply site may be determined, the number of heat insulation units that are being delivered from the supply site may be determined, and the number of heat insulation units that are being received at the supply site may also be determined.

Step 203: determining inventory status information of the heat insulation unit at each distribution site based on intermediate data.

In the present alternative implementation, the intermediate data includes: an intermediate number of the refrigerant units, an ID of a delivery scanning device, and the barcode of the heat insulation box. Based on the intermediate data, a current number of inventory heat insulation units at the distribution site may be determined, the number of heat insulation units that are being delivered from the distribution site may be determined, and the number of heat insulation units that are being received at the distribution site may also be determined.

The method for determining circulation data of a heat insulation unit provided in the present alternative implementation may, for a plurality of heat insulation units, statisticize inventory and circulation status of each different heat insulation box at each different site based on the inventory status information.

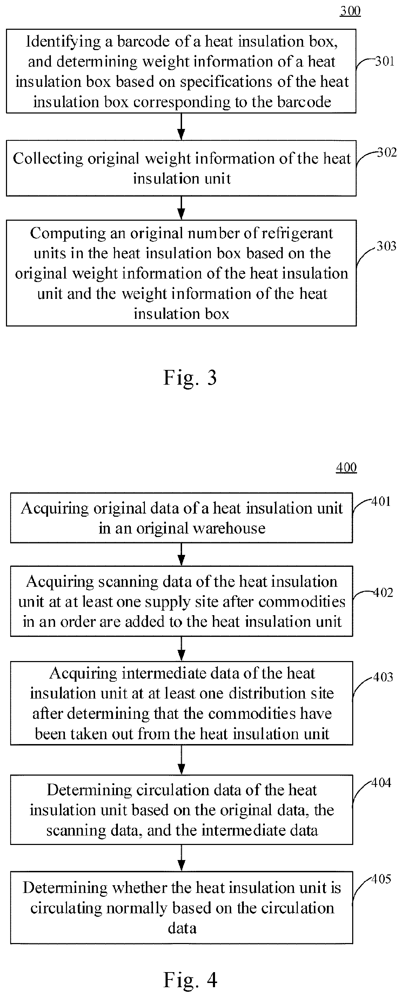

In some alternative implementations of the present embodiment, further referring to Fig. 3, Fig.3 illustrates a process 300 of a method for acquiring original data of a heat insulation unit in an original warehouse according to the present disclosure. The acquiring the original data of the heat insulation unit in the original warehouse includes the following steps:
Step 301: identifying a barcode of a heat insulation box, and determining weight information of a heat insulation box based on specifications of the heat insulation box corresponding to the barcode.

In the present alternative implementation, the specifications of the heat insulation box may be pre-bound to the barcode of the heat insulation box. In this case, the barcode of the heat insulation box may be identified by only one scanning device. Further, the specifications of the heat insulation box corresponding to the barcode of the heat insulation box may be further obtained.

Alternatively, in the present embodiment, the barcode identification of the heat insulation box may be further implemented by a static weighing, scanning and conveying system, where the static weighing, scanning and conveying system is provided with a scanning device and a weighing device, the barcode on the heat insulation box may be identified by the scanning device of the static weighing, scanning and conveying system, and the specifications of the heat insulation box may be further identified by the scanning device of the static weighing, scanning and conveying system.

Step 302: collecting original weight information of the heat insulation unit.

In the present alternative implementation, the original weight information of the heat insulation unit may be measured by the weighing device of the static weighing, scanning and conveying system, and the original weight information of the heat insulation unit includes a total weight value W of the heat insulation box and all refrigerant units in the heat insulation box.

Step 303: computing an original number of refrigerant units in the heat insulation box based on the original weight information of the heat insulation unit and the weight information of the heat insulation box.

In the present alternative implementation, the specifications (including length, width, height, and weight Wi) of the heat insulation box is identified based on the barcode of the heat insulation box, and the total weight value W of the heat insulation box and all refrigerant units in the heat insulation box is measured. Weight of a single refrigerant unit is Mi (weight data inputted based on weight of the refrigerant during purchase), and the original number Ti of the refrigerant units is Ti=(W-Wi)/Mi±K, where K is a weight deviation parameter of the refrigerant unit, where the weight deviation parameter may be a value manually set based on a type of the refrigerant unit, for example, K is ±5%.

In the present alternative implementation, the barcode of the heat insulation box is identified to determine the weight information of the heat insulation box; the original weight information of the heat insulation unit is collected; and the original number of the refrigerant units in the heat insulation box may be computed based on the original weight information of the heat insulation unit and the weight information of the heat insulation box, thereby simply and conveniently obtaining the original number of the refrigerant units in the heat insulation box without manual intervention.

In order to realize the selection of the type and specification of the refrigerant unit, in some other alternative implementations of the present embodiment, the method for acquiring original data of a heat insulation unit in an original warehouse may further include: identifying a barcode of a heat insulation box, determining weight information of the heat insulation box based on specifications of the heat insulation box corresponding to the barcode; collecting original weight information of the heat insulation unit; acquiring a type of a user-configured refrigerant unit; determining weight information of the refrigerant unit corresponding to the type of the refrigerant unit based on the type of the refrigerant unit; and computing the number of the refrigerant units in the heat insulation box based on the weight information of the heat insulation unit, the weight information of the heat insulation box, and the weight information of the refrigerant unit.

In the present alternative implementation, different operation modes may be set for different types of refrigerant units, so that a user can configure the types of the refrigerant units, for example, arranging a refrigerated ice plate or a frozen ice plate within a heat insulation box of a corresponding specification, and arranging the heat insulation box with the ice plate on a static weighing, scanning and conveying system; selecting, if the refrigerated ice plate is selected, an ice plate refrigerating module of the static weighing, scanning and conveying system to record the refrigerated ice plate; and selecting, if the frozen ice plate is selected, an ice plate freezing module of the static weighing, scanning and conveying system to record the frozen ice plate.

In the present alternative implementation, for different refrigerant units, the weight information of the refrigerant unit may be determined based on the type of the refrigerant unit (for example, the refrigerated ice plate or the frozen ice plate), thereby guaranteeing the flexibility of the computation of the original data, and further guaranteeing the accuracy of the computation of the original data.

As shown in Fig. 4, Fig. 4 illustrates a process 400 of the method for monitoring a circulation process of a heat insulation unit according to another embodiment of the present disclosure. The method for monitoring a circulation process of a heat insulation unit includes the following steps:
Step 401: acquiring original data of a heat insulation unit in an original warehouse.

The heat insulation unit is a heat insulation box of an additional refrigerant unit, and the original data includes: an original number of refrigerant units and a barcode of the heat insulation box.

Step 402: acquiring scanning data of the heat insulation unit at at least one supply site after commodities in an order are added to the heat insulation unit.

The supply site is determined based on the order and is bound to an ID of a supply scanning device, and the scanning data includes: the barcode of the heat insulation box and the ID of the supply scanning device.

Step 403: acquiring intermediate data of the heat insulation unit at at least one distribution site after determining that the commodities have been taken out from the heat insulation unit.

The distribution site is determined according to a preset scheduling rule, and the intermediate data includes: an intermediate number of the refrigerant units, an ID of a delivery scanning device, and the barcode of the heat insulation box.

Step 404: determining circulation data of the heat insulation unit based on the original data, the scanning data, and the intermediate data.

The circulation data is turnover data of the heat insulation unit in the circulation process.

It should be understood that the operations and features in the above steps 401-404 correspond to the operations and features in the above steps 101-104, respectively. Therefore, the description of the operations and features in the above steps 101-104 also applies to steps 401-404. The description will not be repeated here.

Step 405: determining whether the heat insulation unit is circulating normally based on the circulation data.

In the present embodiment, the circulation data is the turnover data of the heat insulation unit in the circulation process, the turnover data includes information of sites through which the heat insulation unit passes, and the number of the refrigerant units (the original number and the intermediate number) at all sites may be statisticized. If the numbers of the refrigerant units at all sites are consistent, the heat insulation unit is determined to be circulating normally.

Further, the sites corresponding to the information of the sites through which the heat insulation unit passes may be further connected in series, to obtain the circulation path of the heat insulation unit, the obtained circulation path of the heat insulation unit may be matched with a preset path, and if the obtained circulation path of the heat insulation unit matches the preset path, the heat insulation unit is determined to be circulating normally.

Alternatively, whether the original number of the refrigerant units is consistent with the intermediate number of the refrigerant units is determined; and the heat insulation unit is determined to be circulating normally if the original number of the refrigerant units is consistent with the intermediate number of the refrigerant units.

The method for monitoring a circulation process of a heat insulation unit provided in embodiments of the present disclosure obtains the circulation data, and determines whether the heat insulation unit is circulating normally based on the circulation data, thereby providing a basis for the online monitoring of the whole process of a circulating heat insulation box of the heat insulation unit.

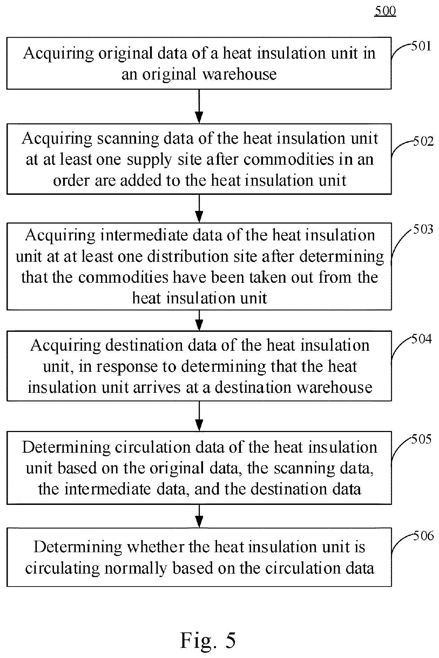

As shown in Fig. 5, Fig. 5 illustrates a process 500 of the method for monitoring a circulation process of a heat insulation unit according to a third embodiment of the present disclosure. The method for monitoring a circulation process of a heat insulation unit includes the following steps:
Step 501: acquiring original data of a heat insulation unit in an original warehouse.

The heat insulation unit is a heat insulation box of an additional refrigerant unit, and the original data includes: an original number of refrigerant units and a barcode of the heat insulation box.

Step 502: acquiring scanning data of the heat insulation unit at at least one supply site after commodities in an order are added to the heat insulation unit.

The supply site is determined based on the order and is bound to an ID of a supply scanning device, and the scanning data includes: the barcode of the heat insulation box and the ID of the supply scanning device.

Step 503: acquiring intermediate data of the heat insulation unit at at least one distribution site after determining that the commodities have been taken out from the heat insulation unit.

The distribution site is determined according to a preset scheduling rule, and the intermediate data includes: an intermediate number of the refrigerant units, an ID of a delivery scanning device, and the barcode of the heat insulation box.

The operations and features in the above steps 501-503 correspond to the operations and features in the above steps 101-103, respectively. Therefore, the description of the operations and features in the above steps 101-103 also applies to steps 501-503. The description will not be repeated here.

Step 504: acquiring destination data of the heat insulation unit, in response to determining that the heat insulation unit arrives at a destination warehouse.

The destination data includes: a destination number of the refrigerant units and the barcode of the heat insulation box.

In the present embodiment, after the heat insulation unit arrives at the destination warehouse, a dynamic weighing and scanning system may scan and identify the barcode of the heat insulation box, measure weight of the heat insulation unit, and compute the number of the refrigerant units, where the dynamic weighing and scanning system may measure the weight of the heat insulation unit when the heat insulation unit is moving, and may further scan and identify the barcode of the heat insulation box when the heat insulation unit is moving.

In some alternative implementations of the present embodiment, the acquiring the destination data of the heat insulation unit includes: identifying the barcode of the heat insulation box of the heat insulation unit, determining weight information of the heat insulation box based on specifications of the heat insulation box corresponding to the barcode; collecting destination weight information of the heat insulation unit; and computing the destination number of the refrigerant units in the heat insulation box based on the destination weight information of the heat insulation unit and the weight information of the heat insulation box.

It should be noted that, in the present embodiment, the approach of obtaining the destination number of the refrigerant units in the heat insulation box may be the same as the approach of acquiring the original number of the refrigerant units and the intermediate number of the refrigerant units.

In the present alternative implementation, the barcode of the heat insulation box of the heat insulation unit is identified to determine the weight information of the heat insulation box based on the specifications of the heat insulation box corresponding to the barcode; the destination weight information of the heat insulation unit is collected; and the destination number of the refrigerant units in the heat insulation box is computed based on the destination weight information of the heat insulation unit and the weight information of the heat insulation box, thereby simply and conveniently obtaining the original number of the refrigerant units in the heat insulation box without manual intervention.

In the present embodiment, the destination number of the refrigerant units is less than or equal to the intermediate number of the refrigerant units. In the circulation of the heat insulation units, when the refrigerant units are not lost, the destination number of the refrigerant units is equal to the intermediate number of the refrigerant units; and when a refrigerant unit is lost, the destination number of the refrigerant units is less than the intermediate number of the refrigerant units.

Step 505: determining circulation data of the heat insulation unit based on the original data, the scanning data, the intermediate data, and the destination data.

The circulation data is turnover data of the heat insulation unit in the circulation process.

In the present embodiment, information of the destination data is added to the circulation data. On the contrary, the turnover data includes the destination number of the refrigerant units.

Step 506: determining whether the heat insulation unit is circulating normally based on the circulation data.

In the present embodiment, the approachs determining whether the heat insulation unit is circulating normally based on the circulation data may include a plurality of alternative implementations.

1) computing information of sites of the heat insulation unit from the original warehouse to the destination warehouse based on the circulation data, matching the computed information of the sites from the original warehouse to the destination warehouse and information of preset sites, and determining that the heat insulation unit is circulating normally if the computed information of the sites from the original warehouse to the destination warehouse matches the information of the preset sites.

2) determining whether the circulation data matches all sites in the intermediate data, and determining that the heat insulation unit is circulating normally if the circulation data matches all sites in the intermediate data.

3) determining whether the original number of the refrigerant units, the intermediate number of the refrigerant units, and the destination number of the refrigerant units in the circulation data are consistent; and determining that the heat insulation unit is circulating normally if the original number of the refrigerant units, the intermediate number of the refrigerant units, and the destination number of the refrigerant units in the circulation data are consistent. Further, after the original number of the refrigerant units, the intermediate number of the refrigerant units, and the destination number of the refrigerant units in the circulation data are consistent, a site trajectory diagram of the heat insulation unit may be further plotted based on the circulation data; whether the site trajectory diagram is consistent with a preset trajectory diagram of the commodities in the order may be determined; and the heat insulation unit may further be determined to be circulating normally if the site trajectory diagram is consistent with the preset trajectory diagram of the commodities in the order.

In the present alternative implementation, the original number of the refrigerant units, the intermediate number of the refrigerant units, and the destination number of the refrigerant units may be compared to determine whether a refrigerant unit is lost; and after it is determined that no refrigerant unit is lost, the circulation data is compared with a commodity trajectory of the commodity in the order, thereby checking the safety of the transport of the order and guaranteeing the normal circulation of the heat insulation unit.

The method for monitoring a circulation process of a heat insulation unit provided in embodiments of the present disclosure acquires destination data of the heat insulation unit, in response to determining that the heat insulation unit arrives at a destination warehouse; and determines whether the heat insulation unit is circulating normally based on original data, intermediate data, circulation data, and destination data, thereby providing a more reliable basis for determining the circulation of the heat insulation unit.

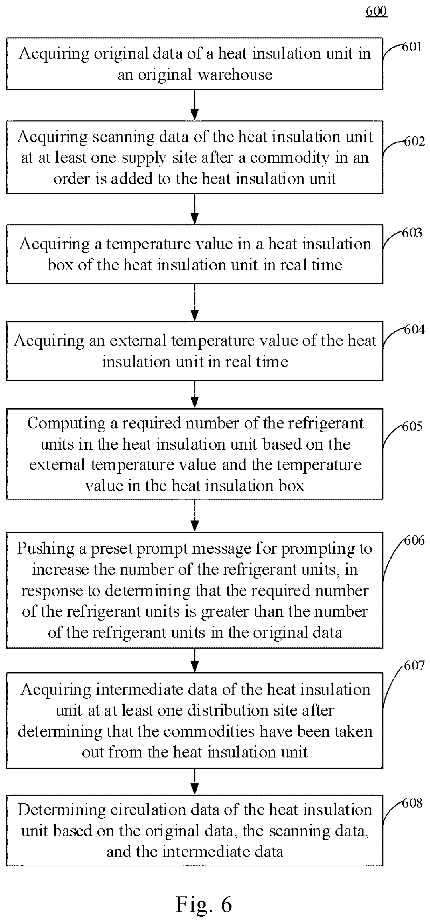

Further, when the method provided in the above embodiments is executed, in order to better prompt a temperature difference between the inside temperature and outside temperature of the heat insulation unit, and guarantee the temperature and humidity requirements for the commodity in the order, a process 600 of the method for monitoring a circulation process of a heat insulation unit according to a fourth embodiment of the present disclosure is provided, as shown in Fig. 6. The method for monitoring a circulation process of a heat insulation unit includes the following steps:
Step 601: acquiring original data of a heat insulation unit in an original warehouse.

The heat insulation unit is a heat insulation box of an additional refrigerant unit, and the original data includes: an original number of refrigerant units and a barcode of the heat insulation box.

Step 602: acquiring scanning data of the heat insulation unit at at least one supply site after a commodity in an order is added to the heat insulation unit.

The supply site is determined based on the order and is bound to an ID of a supply scanning device, and the scanning data includes: the barcode of the heat insulation box and the ID of the supply scanning device.

Step 603: acquiring a temperature value in a heat insulation box of the heat insulation unit in real time.

In the present embodiment, a temperature measuring unit (e.g., a temperature sensor) may be provided in the heat insulation box to measure a temperature value in the heat insulation box. An executing unit acquires measurement data of the temperature measuring unit to obtain the temperature value in the heat insulation box.

Step 604: acquiring an external temperature value of the heat insulation unit in real time.

In the present embodiment, a temperature measuring unit (e.g., a temperature sensor) may be provided outside the heat insulation unit to measure a temperature value outside the heat insulation unit in real time.

Step 605: computing a required number of the refrigerant units in the heat insulation unit based on the external temperature value and the temperature value in the heat insulation box.

In the present embodiment, a difference may be made between the external temperature value and the temperature value in the heat insulation box to obtain a temperature difference between the two, and the required number of the refrigerant units may be determined based on the temperature difference. For example, the temperature difference is 5°, and the required number of the refrigerant units is 1.

Step 606: pushing a preset prompt message for prompting to increase the number of the refrigerant units, in response to determining that the required number of the refrigerant units is greater than the number of the refrigerant units in the original data.

Step 607: acquiring intermediate data of the heat insulation unit at at least one distribution site after determining that the commodities have been taken out from the heat insulation unit.

The distribution site is determined according to a preset scheduling rule, and the intermediate data includes: an intermediate number of the refrigerant units, an ID of a delivery scanning device, and the barcode of the heat insulation box.

Step 608: determining circulation data of the heat insulation unit based on the original data, the scanning data, and the intermediate data.

The circulation data is turnover data of the heat insulation unit in the circulation process.

In the present embodiment, when the required number of the refrigerant units is greater than the number of the refrigerant units in the original data, it is determined that the number of the refrigerant units in the heat insulation unit is not enough to maintain the requirements for the heat insulation unit, and it is necessary to increase the number of the refrigerant units. Further, the pushed preset prompt message can effectively prompt an operator to increase a refrigerant unit in the heat insulation unit, thereby guaranteeing the suitability of the temperature in the heat insulation unit.

The method for monitoring a circulation process of a heat insulation unit provided in the present embodiment computes a required number of refrigerant units in the heat insulation unit based on an external temperature value and a temperature value in the heat insulation box, and pushes a preset prompt message for prompting to increase the number of the refrigerant units when the required number of the refrigerant units is greater than the number of the refrigerant units in original data. In the present embodiment, the internal temperature and external temperature of the heat insulation unit are monitored in real time, to provide a basis for adjusting the number of the refrigerant units, thereby guaranteeing the suitability of the internal temperature of the heat insulation unit.

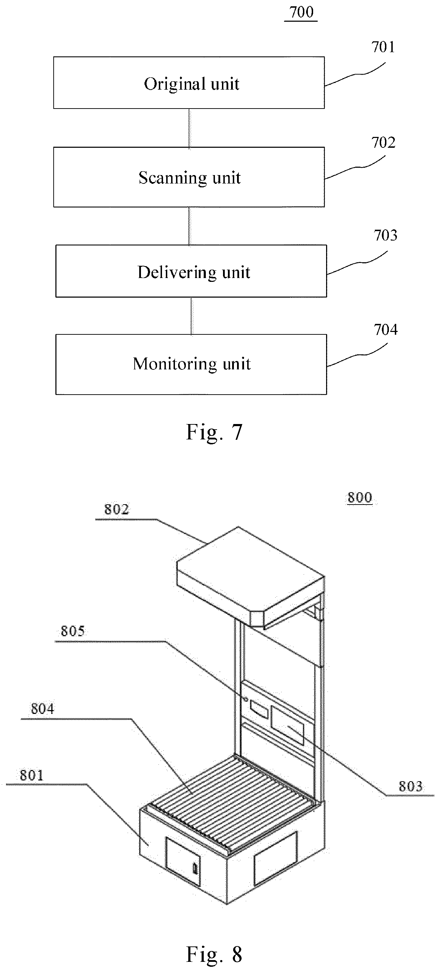

Further referring to Fig. 7, as an implementation of the method shown in the above figures, an embodiment of the present disclosure provides an apparatus for monitoring a circulation process of a heat insulation unit. The embodiment of the apparatus corresponds to the embodiment of the method shown in Fig. 1. The apparatus may be specifically applied to various electronic devices.

As shown in Fig. 7, the embodiment of the present disclosure provides an apparatus 700 for monitoring a circulation process of a heat insulation unit. The apparatus 700 includes: an original unit 701, a scanning unit 702, a delivering unit 703, and a monitoring unit 704. The original unit 701 may be configured to acquire original data of the heat insulation unit in an original warehouse, where the heat insulation unit is a heat insulation box of an additional refrigerant unit, and the original data includes: an original number of refrigerant units and a barcode of the heat insulation box. The scanning unit 702 may be configured to acquire scanning data of the heat insulation unit at at least one supply site after commodities in an order are added to the heat insulation unit, where the supply site is determined based on the order and is bound to an ID of a supply scanning device, and the scanning data includes: the barcode of the heat insulation box and the ID of the supply scanning device. The delivering unit 703 may be configured to acquire intermediate data of the heat insulation unit at at least one distribution site after determining that the commodity has been taken out from the heat insulation unit, where the distribution site is determined according to a preset scheduling rule, and the intermediate data includes: an intermediate number of the refrigerant units, an ID of a delivery scanning device, and the barcode of the heat insulation box. The monitoring unit 704 is configured to determine circulation data of the heat insulation unit based on the original data, the scanning data, and the intermediate data, where the circulation data is turnover data of the heat insulation unit in the circulation process.

Step 101, step 102, step 103, and step 104 in the corresponding embodiment of Fig. 1 may be referred to for specific processing of the original unit 701, the scanning unit 702, the delivering unit 703, and the monitoring unit 704 in the apparatus 700 for monitoring a circulation process of a heat insulation unit and the technical effects thereof in the present embodiment, respectively.

In some embodiments, the apparatus further includes: a destination acquiring unit (not shown in the figure), where the destination acquiring unit may be configured to acquire, in response to determining that the heat insulation unit arrives at a destination warehouse, destination data of the heat insulation unit, the destination data including: a destination number of the refrigerant units and the barcode of the heat insulation box; and the monitoring unit 704 is further configured to determine whether the heat insulation unit is circulating normally based on the original data, the intermediate data, the circulation data, and the destination data.

In some embodiments, the apparatus further includes: a circulation determining unit (not shown in the figure); where the circulation determining unit may be configured to determine whether the heat insulation unit is circulating normally based on the circulation data.

In some embodiments, the destination acquiring unit includes: a determining module (not shown in the figure), a destination collecting module (not shown in the figure), and a destination computing module (not shown in the figure). The determining module may be configured to identify the barcode of the heat insulation box of the heat insulation unit, and determine weight information of the heat insulation box based on specifications of the heat insulation box corresponding to the barcode. The destination collecting module may be configured to collect destination weight information of the heat insulation unit. The destination computing module may be configured to compute the destination number of the refrigerant units in the heat insulation box based on the destination weight information of the heat insulation unit and the weight information of the heat insulation box.

In some embodiments, the circulation determining unit includes: a data determining module (not shown in the figure) and a circulating module (not shown in the figure). The data determining module may be configured to determine whether the original number of the refrigerant units, the intermediate number of the refrigerant units, and the destination number of the refrigerant units in the circulation data are consistent. The circulating module may be configured to determine that the heat insulation unit is circulating normally when the original number of the refrigerant units, the intermediate number of the refrigerant units, and the destination number of the refrigerant units in the circulation data are consistent.

In some embodiments, the circulation data includes: inventory status information of the heat insulation unit in the original warehouse, all supply sites, and all distribution sites; and the monitoring unit 704 includes: a departure module (not shown in the figure), a scanning module (not shown in the figure), and an intermediate module (not shown in the figure). The departure module may be configured to determine the inventory status information of the heat insulation unit in the original warehouse based on the original data. The scanning module may be configured to determine, based on scanning data, inventory status information of the heat insulation unit at a supply site corresponding to each piece of the scanning data. The intermediate module may be configured to determine inventory status information of the heat insulation unit at each distribution site based on the intermediate data.

In some embodiments, the preset scheduling rule is configured to: dispatch a corresponding vehicle for each distribution site, and making different routes for different vehicles based on the number of heat insulation units and the specifications of the heat insulation box at each distribution site.

In some embodiments, the original unit 701 includes: an identifying module (not shown in the figure), a departure collecting module (not shown in the figure), and a departure computing module (not shown in the figure). The identifying module may be configured to identify the barcode of the heat insulation box, and determine the weight information of the heat insulation box based on the specifications of the heat insulation box corresponding to the barcode. The departure collecting module may be configured to collect original weight information of the heat insulation unit. The departure computing module may be configured to compute an original number of refrigerant units in the heat insulation box based on the original weight information of the heat insulation unit and the weight information of the heat insulation box.

In some embodiments, the departure computing module includes: an acquiring submodule (not shown in the figure), a determining submodule (not shown in the figure), and a computing submodule (not shown in the figure). The acquiring submodule may be configured to acquire a type of a user-configured refrigerant unit. The determining submodule may be configured to determine weight information of the refrigerant unit corresponding to the type of the refrigerant unit based on the type of the refrigerant unit. The computing submodule may be configured to compute the number of the refrigerant units in the heat insulation box based on the weight information of the heat insulation unit, the weight information of the heat insulation box, and the weight information of the refrigerant unit.

In some embodiments, the apparatus further includes: an internal temperature acquiring unit (not shown in the figure), an external temperature acquiring unit (not shown in the figure), a computing unit (not shown in the figure), and a pushing unit (not shown in the figure). The internal temperature acquiring unit may be configured to acquire a temperature value in the heat insulation box of the heat insulation unit in real time. The external temperature acquiring unit may be configured to acquire an external temperature value of the heat insulation unit in real time. The computing unit may be configured to compute a required number of the refrigerant units in the heat insulation unit based on the external temperature value and the temperature value in the heat insulation box. The pushing unit may be configured to push a preset prompt message for prompting to increase the number of the refrigerant units, in response to determining that the required number of the refrigerant units is greater than the number of the refrigerant units in the original data.

As shown in Fig. 8, the embodiment of the present disclosure further provides a weighing and scanning apparatus 800. The weighing and scanning apparatus 800 includes: a weighing unit 801, a scanning unit 802, a computing unit 803, and a conveying unit 804. The weighing unit 801 is configured to measure weight of a heat insulation unit, where the heat insulation unit is a heat insulation box of an additional refrigerant unit, and a surface of the heat insulation box is provided with a barcode of the heat insulation box. The scanning unit 802 is configured to identify the barcode of the heat insulation box. The computing unit 803 is configured to acquire weight of the heat insulation box corresponding to the barcode of the heat insulation box, compute an original number of the refrigerant units based on the weight of the heat insulation unit and the weight of the heat insulation box, and use the original number of the refrigerant units and the barcode of the heat insulation box as original data of the heat insulation unit in an original warehouse. The conveying unit 804 is configured to convey the heat insulation unit to a packing workbench in response to detecting the heat insulation unit.

In the present embodiment, the weighing unit 801 is a weight sensor integrated on the weighing and scanning apparatus 800. When the heat insulation unit is arranged on the weighing unit 801, the weighing unit 801 may measure departure weight of the heat insulation unit.

In the present embodiment, the scanning unit 802 is a machine integrated on the weighing and scanning apparatus 800 to scan a barcode of a heat insulation box. The barcode of a heat insulation box may correspond to specifications (including length, width, height, and weight) of the heat insulation box.

In the present embodiment, the computing unit 803 may be a controller (e.g., a CPU or a programmable logic controller), and after acquiring the barcode of the heat insulation box, the computing unit 803 may obtain the weight of the heat insulation box by looking up a table or interacting with a terminal. It is necessary to compute the original number of the refrigerant units based on weight of the refrigerant unit. Generally, the weight of the refrigerant unit is a constant parameter. The constant parameter may be a weight parameter inputted by a designer into the computing unit 803 based on a type of a current refrigerant unit, or may be a weight parameter corresponding to a current refrigerant unit obtained by looking up a table based on the current refrigerant unit. Alternatively, the weighing and scanning apparatus provided in the present disclosure may further include a button 805, such that an operator selects weight parameters corresponding to different types of refrigerants by operating the button 805.

After determining the weight of the heat insulation unit, the weight of the refrigerant unit, and the weight of the heat insulation box, the computing unit 803 may compute the original number Ti of the refrigerant units according to the formula Ti=(W-Wi)/Mi±K (W represents the weight of the heat insulation unit, Wi represents the weight of the heat insulation box, Mi represents the weight of the refrigerant unit, and K represents a weight deviation parameter of the refrigerant unit).

In the present embodiment, the conveying unit 804 is a component for conveying the heat insulation unit. As shown in Fig. 8, the conveying unit 804 includes a plurality of rollers which are of the same specification, and the axial lines of the rollers are parallel to each other. Of course, the conveying unit 804 may also be in other forms, e.g., a conveyor belt. The conveying unit 804 may be adjacent to an inlet of a heat insulation box conveying line. After the conveying unit 804 is started, the heat insulation unit may be conveyed to the heat insulation box conveying line, and then the heat insulation unit may be transferred to the packing workbench by a packing operator.

The weighing and scanning apparatus provided in the present disclosure can measure weight of a heat insulation unit, identify a barcode of a heat insulation box, compute an original number of refrigerant units, use the original number of the refrigerant units and the barcode of the heat insulation box as original data of the heat insulation unit in an original warehouse, and convey the heat insulation unit to a packing workbench, thereby measuring the heat insulation unit in various aspects using a weighing and scanning apparatus, and improving the accuracy and reliability of the obtained original data of the original warehouse.

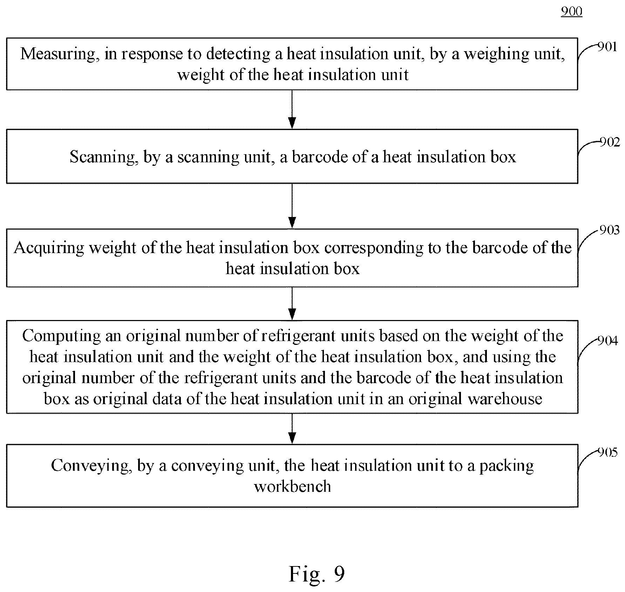

As shown in Fig. 9, a process 900 of a weighing and scanning method according to an embodiment of the present disclosure is shown. The weighing and scanning method includes the following steps:
Step 901: measuring, in response to detecting a heat insulation unit, by a weighing unit, weight of the heat insulation unit.

The heat insulation unit is a heat insulation box of an additional refrigerant unit, and a surface of the heat insulation box is provided with a barcode of the heat insulation box.

In the present embodiment, the weighing unit is a weight sensor. When the heat insulation unit is arranged on the weighing unit, the weighing unit may measure the weight of the heat insulation unit.

Step 902: scanning, by a scanning unit, a barcode of a heat insulation box.

In the present embodiment, the scanning unit is a machine for scanning the barcode of the heat insulation box. The barcode of a heat insulation box may correspond to specifications (including length, width, height, and weight) of the heat insulation box.

Step 903: acquiring weight of the heat insulation box corresponding to the barcode of the heat insulation box.

In the present embodiment, since the barcode of the heat insulation box corresponds to the specifications of the heat insulation box, the weight of the heat insulation box may be obtained by looking up a table or interacting with a terminal after the barcode of the heat insulation box is acquired.

Step 904: computing an original number of refrigerant units based on the weight of the heat insulation unit and the weight of the heat insulation box, and using the original number of the refrigerant units and the barcode of the heat insulation box as original data of the heat insulation unit in an original warehouse.

In the present embodiment, it is necessary to compute the original number of the refrigerant units based on weight of the refrigerant unit. Generally, the weight of the refrigerant unit is a constant parameter. The constant parameter may be a weight parameter inputted by a designer based on a type of a current refrigerant unit.

After the weight of the heat insulation unit, the weight of the refrigerant unit, and the weight of the heat insulation box are determined, the original number Ti of the refrigerant units may be computed according to the formula Ti=(W-Wi)/Mi±K (W represents the weight of the heat insulation unit, Wi represents the weight of the heat insulation box, Mi represents the weight of the refrigerant unit, and K represents a weight deviation parameter of the refrigerant unit).

Step 905: conveying, by a conveying unit, the heat insulation unit to a packing workbench.

In the present embodiment, the conveying unit is a component for conveying the heat insulation unit, and is adjacent to an inlet of a heat insulation box conveying line. After the conveying unit is started, the heat insulation unit may be conveyed to the heat insulation box conveying line, and then the heat insulation unit may be conveyed to the packing workbench by a packing operator.

The weighing and scanning method provided in the present disclosure detects a heat insulation unit, measures, by a weighing unit, weight of the heat insulation unit, identifies, by a scanning unit, a barcode of a heat insulation box, computes an original number of refrigerant units, uses the original number of the refrigerant units and the barcode of the heat insulation box as original data of the heat insulation unit in an original warehouse, and conveys, by a conveying unit, the heat insulation unit to a packing workbench, thereby measuring the heat insulation unit in various aspects, and improving the accuracy and reliability of the obtained original data of the original warehouse.

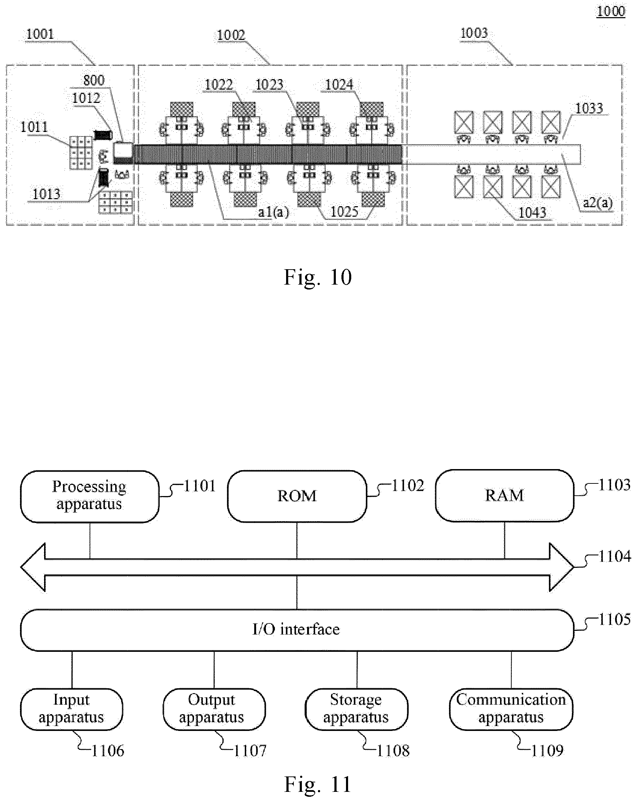

As shown in Fig. 10, an embodiment of the present disclosure provides a schematic structural diagram of an original warehouse 1000. The original warehouse 1000 includes: a supply region 1001, a production region 1002, and a distribution region 1003 that are adjacent successively and are communicated through a heat insulation box conveying line *a.*

The supply region 1001 includes: the weighing and scanning apparatus 800 as shown in Fig. 8, a heat insulation box storage unit 1011, a refrigerant storage unit 1012, and a weighing operation region 1013; the weighing operation region 1013 is adjacent to the weighing and scanning apparatus 800, the heat insulation box storage unit 1011, and the refrigerant storage unit 1012, respectively; and the weighing and scanning apparatus 800 is adjacent to an inlet of the heat insulation box conveying line *a.*

The production region 1002 includes: a production region segment a1 of the heat insulation box conveying line *a*, and a packing workbench 1022 arranged on at least one side of the production region segment a1.

The distribution region 1003 includes: a distribution region segment a2 of the heat insulation box conveying line *a*, and a delivery operation region 1033 and a commodity storage unit 1043 arranged on at least one side of the distribution region segment a2.

The conveying process of the heat insulation unit in the original warehouse is as follows:
An operator in the weighing operation region 1013 arranges a refrigerant unit in the refrigerant storage unit 1012 into a heat insulation box, where the heat insulation box is taken out from the heat insulation box storage unit 1011, and arranged in the weighing and scanning apparatus 800 for weighing.

After the scanning apparatus 800 acquires specification and model of the heat insulation box, a barcode of the heat insulation box, attribute of the refrigerant unit (refrigerating or freezing) inside the heat insulation box, and an original number of the refrigerant units, a conveying unit of the weighing and scanning apparatus 800 conveys a heat insulation box of an additional refrigerant unit to the heat insulation box conveying line *a.*

A packing operator in the production region 1002 carries the heat insulation box to the packing workbench 1022 as required: automatically conveying the heat insulation box of the additional refrigerant unit on the production region segment a1 of the heat insulation box conveying line *a.* The packing operator transfers an appropriate number of the heat insulation boxes to the packing workbench 1022 for temporary storage based on type requirements for his own order.

The packing operator scans a commodity order barcode (order unit container number or commodity barcode) of an order, scans the barcode of the heat insulation box, and binds all commodities (single or a plurality of pieces) of the order to the barcode of the heat insulation box. In addition, the operator arranges the commodities of the order in the heat insulation box.

The packing operator completely seals the heat insulation box with an adhesive tape or other consumables; and acquires an order sheet of the order. The operator pastes the order sheet on an outer surface of the heat insulation box, and pushes the heat insulation box to the distribution region segment a2 of the heat insulation box conveying line *a.*

In the distribution region 1003, a sorting operator located in the delivery operation region 1033 sorts orders based on road directions of the orders, and loads the orders on vehicles for transport. The sorting operator sorts the orders to commodity storage units 1043 in corresponding road directions based on address information on order sheets of the orders, loads commodities in different road directions on corresponding vehicles respectively after completing sorting the commodities, and transports the commodities by the vehicles.

The original warehouse provided in the present disclosure includes a supply region, a production region, and a distribution region, which are communicated through a heat insulation box conveying line, thereby realizing the transport of the heat insulation box in the regions, and guaranteeing the reliable supply of the heat insulation box.

In some alternative implementations of the present embodiment, as shown in Fig. 10, the production region 1002 further includes at least one of: a displayer 1023 arranged on the packing workbench 1022; an order sheet printer 1024 arranged on the packing workbench 1022; and an additional refrigerant storage container 1025 adjacent to the packing workbench 1022.

In the present alternative implementation, in the production region 1002, after scanning the commodity order barcode, the packing operator may determine the information, such as the order status and the original number of the refrigerant units, by the displayer 1023 on the packing workbench 1022. For a commodity with deep-freezing requirements, an appropriate number of additional refrigerant units (e.g., dry ice bags) may be taken out from the additional refrigerant storage container 1025 adjacent to the packing workbench 1022 and arranged in the heat insulation box of the heat insulation unit. After the heat insulation box is sealed, the order sheets of the orders may be printed by the order sheet printer 1024 on the packing workbench 1022.

The production region provided in the present alternative implementation includes: one of a displayer, an order sheet printer, and an additional refrigerant storage container, and realizes at least one function of order display, order printing, and adding an additional refrigerant for ordered commodities in a production region, thereby guaranteeing functional diversity of the production region.

With further reference to Fig. 11, a schematic structural diagram of an electronic device suitable for implementing the embodiments of the present disclosure is shown.

As shown in Fig. 11, the electronic device 1100 includes a processing apparatus (e.g. central processing unit or graphics processing unit) 1101, which may execute various appropriate actions and processes in accordance with a program stored in a read-only memory (ROM) 1102 or a program loaded into a random access memory (RAM) 1103 from a storage portion 1108. The RAM 1103 also stores various programs and data required by operations of the electronic device 1100. The processing apparatus 1101, the ROM 1102 and the RAM 1103 are connected to each other through a bus 1104. An input/output (I/O) interface 1105 is also connected to the bus 1104.

Generally, the following devices can be connected to the I/O interface 1105: input devices 1106 including such as touch screen, touchpad, keyboard, mouse, etc.; output device 1107 including such as Liquid Crystal Display (LCD, Liquid Crystal Display), loudspeaker, vibrator; storage devices 1108 including such as magnetic tape, hard disk; and the communication device 1109. The communication device 1109 can allow the electronic device 1100 to communicate wirelessly or wirelessly with other devices to exchange data. Although Figure 11 shows an electronic device 1100 with various devices, it should be understood that it is not required to implement or possess all of the devices shown. Can be implemented or have more or fewer devices instead. Each box shown in Figure 11 can represent a single device, or multiple devices as needed.

In particular, according to the embodiments of the present disclosure, the processes described above with reference to the flowcharts may be implemented in a computer software program. For example, an embodiment of the present disclosure includes a computer program product, which includes a computer program that is tangibly embedded in a computer-readable medium. The computer program includes program codes for performing the method as illustrated in the flowcharts. In such an embodiment, the computer program may be downloaded and installed from a network via the communication device 1109, or may be installed from the storage devices 1108 or ROM 1102. The computer program, when executed by the processing apparatus 1101, implements the above mentioned functionalities as defined by the method of the present disclosure.

It should be noted that the computer-readable medium in the present disclosure may be computer-readable signal medium or computer-readable storage medium or any combination of the above two. An example of the computer-readable medium may include, but not limited to: electric, magnetic, optical, electromagnetic, infrared, or semiconductor systems, apparatus, elements, or a combination of any of the above. A more specific example of the computer-readable medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. In the present disclosure, the computer-readable medium may be any physical medium containing or storing programs which may be used by a command execution system, apparatus or element or incorporated thereto. In the present disclosure, the computer-readable signal medium may include data signal in the base band or propagating as parts of a carrier, in which computer-readable program codes are carried. The propagating data signal may take various forms, including but not limited to: an electromagnetic signal, an optical signal or any suitable combination of the above. The signal medium that can be read by computer may be any computer-readable medium except for the computer-readable medium. The computer-readable medium is capable of transmitting, propagating or transferring programs for use by, or used in combination with, a command execution system, apparatus or element. The program codes contained on the computer-readable medium may be transmitted with any suitable medium including but not limited to: wireless, wired, optical cable, RF (Radio Frequency), etc., or any suitable combination of the above.

The computer readable media may be included in the server. It can also exist alone and not be assembled into the server. The computer readable medium carrying one or more programs, as the above one or more programs is the server executes, makes the server to: acquire original data of the heat insulation unit in an original warehouse, wherein the heat insulation unit is a heat insulation box of an additional refrigerant unit, and the original data comprises: an original number of refrigerant units and a barcode of the heat insulation box; acquire scanning data of the heat insulation unit at at least one supply site after commodities in an order are added to the heat insulation unit, wherein the supply site is determined according to the order and is bound to an ID of a supply scanning device, and the scanning data comprises: the barcode of the heat insulation box and the ID of the supply scanning device; acquire intermediate data of the heat insulation unit at at least one distribution site after it is determined that the commodities have been taken out from the heat insulation unit, wherein the distribution site is determined according to a preset scheduling rule, and the intermediate data comprises: an intermediate number of the refrigerant units, an ID of a delivery scanning device, and the barcode of the heat insulation box; and determine circulation data of the heat insulation unit based on the original data, the scanning data, and the intermediate data, the circulation data of the heat insulation unit being turnover data of the heat insulation unit in the circulation process.

A computer program code for performing operations in the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through the Internet using an Internet service provider).

The flowcharts and block diagrams in the accompanying drawings illustrate architectures, functions and operations that may be implemented according to the systems, methods and computer program products of the various embodiments of the present disclosure. In this regard, each of the blocks in the flowcharts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the accompanying drawings. For example, two blocks presented in succession may be executed, substantially in parallel, or they may sometimes be executed in a reverse sequence, depending on the function involved. It should also be noted that each block in the block diagrams and/or flowcharts as well as a combination of blocks may be implemented using a dedicated hardware-based system performing specified functions or operations, or by a combination of a dedicated hardware and computer instructions.

The units involved in the embodiments of the present disclosure may be implemented by means of software or hardware. The described units may also be provided in a processor, for example, may be described as: an original unit, a scanning unit, a delivering unit and a monitoring unit. Here, the names of these units do not in some cases constitute limitations to such units themselves. For example, the original unit may also be described as a unit " configured to acquire original data of the heat insulation unit in an original warehouse, wherein the heat insulation unit is a heat insulation box of an additional refrigerant unit, and the original data comprises: an original number of refrigerant units and a barcode of the heat insulation box. "

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof in accordance with the appended claims.

## Claims

1. A method for monitoring a circulation process of a heat insulation unit, the method comprising:
acquiring (101) original data of the heat insulation unit in an original warehouse, wherein the heat insulation unit is a heat insulation box of an additional refrigerant unit, and the original data comprises: an original number of refrigerant units and a barcode of the heat insulation box;
acquiring (102) scanning data of the heat insulation unit at at least one supply site after commodities in an order are added to the heat insulation unit, wherein the supply site is determined according to the order and is bound to an ID of a supply scanning device, and the scanning data comprises: the barcode of the heat insulation box and the ID of the supply scanning device;
acquiring (103) intermediate data of the heat insulation unit at at least one distribution site after it is determined that the commodities have been taken out from the heat insulation unit, wherein the distribution site is determined according to a preset scheduling rule, and the intermediate data comprises: an intermediate number of the refrigerant units, an ID of a delivery scanning device, and the barcode of the heat insulation box; and
determining (104) circulation data of the heat insulation unit based on the original data, the scanning data, and the intermediate data, the circulation data of the heat insulation unit being turnover data of the heat insulation unit in the circulation process.

2. The method according to claim 1, wherein the method further comprises:
acquiring (504) destination data of the heat insulation unit, in response to determining that the heat insulation unit arrives at a destination warehouse, the destination data comprising: a destination number of the refrigerant units and the barcode of the heat insulation box; and
the determining (104) circulation data of the heat insulation unit based on the original data, the scanning data, and the intermediate data comprising: determining the circulation data of the heat insulation unit based on the original data, the scanning data, the intermediate data, and the destination data.

3. The method according to claim 1 or 2, wherein the method further comprises:
determining (405) whether the heat insulation unit is circulating normally based on the circulation data.

4. The method according to claim 2, wherein the acquiring (504) destination data of the heat insulation unit comprises:
identifying (301) the barcode of the heat insulation box of the heat insulation unit, and determining weight information of the heat insulation box based on specifications of the heat insulation box corresponding to the barcode;
collecting (302) destination weight information of the heat insulation unit;
and
computing (303) the destination number of the refrigerant units in the heat insulation box based on the destination weight information of the heat insulation unit and the weight information of the heat insulation box.

5. The method according to claim 3, wherein the determining (405) whether the heat insulation unit is circulating normally based on the circulation data comprises:
determining whether the original number of the refrigerant units, the intermediate number of the refrigerant units, and the destination number of the refrigerant units in the circulation data are consistent; and
determining that the heat insulation unit is circulating normally, when the original number of the refrigerant units, the intermediate number of the refrigerant units, and the destination number of the refrigerant units in the circulation data are consistent.

6. The method according to claim 1, wherein the circulation data comprises:
inventory status information of the heat insulation unit in the original warehouse, all supply sites, and all distribution sites; and
the determining the circulation data of the heat insulation unit based on the original data, the scanning data, and the intermediate data comprises:
determining (201) the inventory status information of the heat insulation unit in the original warehouse based on the original data;
determining (202), based on scanning data, inventory status information of the heat insulation unit at a supply site corresponding to each piece of the scanning data; and
determining (203) inventory status information of the heat insulation unit at each distribution site based on the intermediate data.

7. The method according to any one of claims 1-6, wherein the preset scheduling rule comprises: dispatching a corresponding vehicle for each distribution site, and making different routes for different vehicles based on a number of heat insulation units and the specifications of the heat insulation box at each distribution site.

8. The method according to claim 4, wherein the acquiring (101) original data of the heat insulation unit in an original warehouse comprises:
identifying (301) the barcode of the heat insulation box, and determining the weight information of the heat insulation box based on the specifications of the heat insulation box corresponding to the barcode;
collecting (302) original weight information of the heat insulation unit; and
computing (303) the original number of the refrigerant units in the heat insulation box based on the original weight information of the heat insulation unit and the weight information of the heat insulation box;
wherein the computing (303) the original number of the refrigerant units in the heat insulation box based on the original weight information of the heat insulation unit and the weight information of the heat insulation box comprises:
acquiring a type of a user-configured refrigerant unit;
determining weight information of the refrigerant unit corresponding to the type of the refrigerant unit based on the type of the refrigerant unit; and
computing the number of the refrigerant units in the heat insulation box based on the weight information of the heat insulation unit, the weight information of the heat insulation box, and the weight information of the refrigerant unit.

9. The method according to any one of claims 1-8, wherein the method further comprises:
acquiring (603) a temperature value in the heat insulation box of the heat insulation unit in real time;
acquiring (604) an external temperature value of the heat insulation unit in real time;
computing (605) a required number of the refrigerant units in the heat insulation unit based on the external temperature value and the temperature value in the heat insulation box; and
pushing (606) a preset prompt message for prompting to increase the number of the refrigerant units, in response to determining that the required number of the refrigerant units is greater than the number of the refrigerant units in the original data.

10. An apparatus for monitoring a circulation process of a heat insulation unit, the apparatus comprising:
an original unit (701) configured to acquire original data of the heat insulation unit in an original warehouse, wherein the heat insulation unit is a heat insulation box of an additional refrigerant unit, and the original data comprises: an original number of refrigerant units and a barcode of the heat insulation box;
a scanning unit (702) configured to acquire scanning data of the heat insulation unit at at least one supply site after commodities in an order are added to the heat insulation unit, wherein the supply site is determined according to the order and is bound to an ID of a supply scanning device, and the scanning data comprises: the barcode of the heat insulation box and the ID of the supply scanning device;
a delivering unit (703) configured to acquire intermediate data of the heat insulation unit at at least one distribution site after it is determined that the commodities have been taken out from the heat insulation unit, wherein the distribution site is determined according to a preset scheduling rule, and the intermediate data comprises: an intermediate number of the refrigerant units, an ID of a delivery scanning device, and the barcode of the heat insulation box; and
a monitoring unit (704) configured to determine circulation data of the heat insulation unit based on the original data, the scanning data, and the intermediate data, the circulation data of the heat insulation unit being turnover data of the heat insulation unit in the circulation process.

11. The apparatus according to claim 10, further comprising:
a weighing and scanning apparatus (800), comprising:
a weighing unit (801) configured to measure weight of the heat insulation unit, wherein a surface of the heat insulation box is provided with the barcode of the heat insulation box;
a scanning unit (802) configured to identify the barcode of the heat insulation box;
a computing unit (803) configured to acquire weight of the heat insulation box corresponding to the barcode of the heat insulation box, compute an original number of the refrigerant units based on the weight of the heat insulation unit and the weight of the heat insulation box, and use the original number of the refrigerant units and the barcode of the heat insulation box as original data of the heat insulation unit in an original warehouse; and
a conveying unit (804) configured to convey the heat insulation unit to a packing workbench in response to detecting the heat insulation unit.

12. The method according to any one of claims 1-7, further comprising:
measuring (901), in response to detecting the heat insulation unit, by a weighing unit, weight of the heat insulation unit, and a surface of the heat insulation box is provided with the barcode of the heat insulation box;
scanning (902), by a scanning unit, the barcode of the heat insulation box;
acquiring (903) weight of the heat insulation box corresponding to the barcode of the heat insulation box;
computing (904) an original number of the refrigerant units based on the weight of the heat insulation unit and the weight of the heat insulation box, and using the original number of the refrigerant units and the barcode of the heat insulation box as original data of the heat insulation unit in the original warehouse; and
conveying (905), by a conveying unit, the heat insulation unit to a packing workbench.

13. The method of any one of claims 1-9, wherein the original warehouse (1000) comprises: a supply region (1001), a production region (1002), and a distribution region (1003) that are adjacent sequentially and are communicated through a heat insulation box conveying line (a); wherein
the supply region (1001) comprises: the weighing and scanning apparatus (800) according to claim 11, a heat insulation box storage unit (1011), a refrigerant storage unit (1012), and a weighing operation region (1013); the weighing operation region (1013) is adjacent to the weighing and scanning apparatus (800), the heat insulation box storage unit (1011), and the refrigerant storage unit (1012), respectively; and the weighing and scanning apparatus (800) is adjacent to an inlet of the heat insulation box conveying line (a);
the production region (1002) comprises: a production region segment (a1) of the heat insulation box conveying line (a), and a packing workbench (1022) arranged on at least one side of the production region segment (a1); and
the distribution region (1003) comprises: a distribution region segment (a2) of the heat insulation box conveying line (a), and a delivery operation region (1033) and a commodity storage unit (1043) arranged on at least one side of the distribution region segment (a2).

14. An electronic device, comprising:
one or more processors; and
a storage apparatus storing one or more programs thereon,
the one or more programs, when executed by the one or more processors, causing the one or more processors to implement the method according to any one of claims 1-9.

15. A computer readable medium, storing a computer program thereon, wherein the program, when executed by a processor, implements the method according to any one of claims 1-9.

## Patentansprüche

1. Verfahren zum Überwachen eines Umlaufvorgangs einer Wärmeisoliereinheit, wobei das Verfahren umfasst:
Erfassen (101) von ursprünglichen Daten der Wärmeisoliereinheit in einem ursprünglichen Lager, wobei die Wärmeisoliereinheit eine Wärmeisolierbox einer zusätzlichen Kältemitteleinheit ist und die ursprünglichen Daten umfassen: eine ursprüngliche Anzahl von Kältemitteleinheiten und einen Strichcode der Wärmeisolierbox;
Erfassen (102) von Scandaten der Wärmeisoliereinheit bei mindestens einer Versorgungsstelle nach dem Hinzufügen von Waren in einer Reihenfolge zu der Wärmeisoliereinheit, wobei die Versorgungsstelle gemäß der Reihenfolge bestimmt wird und mit einer Kennzeichnung einer Versorgungsscanvorrichtung verbunden ist, und die Scandaten umfassen: den Strichcode der Wärmeisolierbox und die Kennzeichnung der Versorgungsscanvorrichtung;
Erfassen (103) von Zwischendaten der Wärmeisoliereinheit bei mindestens einer Verteilungsstelle, nachdem bestimmt worden ist, dass die Waren aus der Wärmeisoliereinheit entnommen worden sind, wobei die Verteilungsstelle gemäß einer voreingestellten Dispositionsregel bestimmt wird und die Zwischendaten umfassen: eine Zwischenanzahl der Kältemitteleinheiten, eine Kennzeichnung einer Auslieferungsscanvorrichtung und den Strichcode der Wärmeisolierbox; und
Bestimmen (104) von Umlaufdaten der Wärmeisoliereinheit auf der Basis der ursprünglichen Daten, der Scandaten und der Zwischendaten, wobei die Umlaufdaten der Wärmeisoliereinheit Umsatzdaten der Wärmeisoliereinheit in dem Umlaufvorgang sind.

2. Verfahren nach Anspruch 1, wobei das Verfahren ferner umfasst:
Erfassen (504) von Zieldaten der Wärmeisoliereinheit als Reaktion auf das Bestimmen, dass die Wärmeisoliereinheit bei einem Ziellager ankommt, wobei die Zieldaten umfassen: eine Zielanzahl der Kältemitteleinheiten und den Strichcode der Wärmeisolierbox; und
Bestimmen (104) von Umlaufdaten der Wärmeisoliereinheit auf der Basis der ursprünglichen Daten, der Scandaten und der Zwischendaten, umfassend: Bestimmen der Umlaufdaten der Wärmeisoliereinheit auf der Basis der ursprünglichen Daten, der Scandaten, der Zwischendaten und der Zieldaten.

3. Verfahren nach Anspruch 1 oder 2, wobei das Verfahren ferner umfasst:
Bestimmen (405) auf der Basis der Umlaufdaten, ob die Wärmeisoliereinheit normal umläuft.

4. Verfahren nach Anspruch 2, wobei das Erfassen (504) von Zieldaten der Wärmeisoliereinheit umfasst:
Identifizieren (301) des Strichcodes der Wärmeisolierbox der Wärmeisoliereinheit und Bestimmen von Gewichtsinformationen der Wärmeisolierbox auf der Basis von Spezifikationen der Wärmeisolierbox, die dem Strichcode entsprechen;
Sammeln (302) von Zielgewichtsinformationen der Wärmeisoliereinheit; und
Berechnen (303) der Zielanzahl der Kältemitteleinheiten in der Wärmeisolierbox auf der Basis der Zielgewichtsinformationen der Wärmeisoliereinheit und der Gewichtsinformationen der Wärmeisolierbox.

5. Verfahren nach Anspruch 3, wobei das Bestimmen (405) auf der Basis der Umlaufdaten, ob die Wärmeisoliereinheit normal umläuft, umfasst:
Bestimmen, ob die ursprüngliche Anzahl der Kältemitteleinheiten, die Zwischenanzahl der Kältemitteleinheiten und die Zielanzahl der Kältemitteleinheiten in den Umlaufdaten konsistent sind; und
Bestimmen, dass die Wärmeisoliereinheit normal umläuft, wenn die ursprüngliche Anzahl der Kältemitteleinheiten, die Zwischenanzahl der Kältemitteleinheiten und die Zielanzahl der Kältemitteleinheiten in den Umlaufdaten konsistent sind.

6. Verfahren nach Anspruch 1, wobei die Umlaufdaten umfassen:
Bestandstatusinformationen der Wärmeisoliereinheit in dem ursprünglichen Lager, aller Versorgungsstellen und aller Verteilungsstellen; und
das Bestimmen der Umlaufdaten der Wärmeisoliereinheit auf der Basis der ursprünglichen Daten, der Scandaten und der Zwischendaten umfasst:
Bestimmen (201) der Bestandstatusinformationen der Wärmeisoliereinheit in dem ursprünglichen Lager auf der Basis der ursprünglichen Daten;
Bestimmen (202), auf der Basis von Scandaten, von Bestandstatusinformationen der Wärmeisoliereinheit bei einer Versorgungsstelle, die jedem Teil der Scandaten entsprechen; und
Bestimmen (203) von Bestandstatusinformationen der Wärmeisoliereinheit bei jeder Verteilungsstelle auf der Basis der Zwischendaten.

7. Verfahren nach einem der Ansprüche 1 bis 6, wobei die voreingestellte Dispositionsregel umfasst: Abfertigen eines entsprechenden Fahrzeugs für jede Verteilungsstelle, und Erstellen von verschiedenen Routen für verschiedene Fahrzeuge auf der Basis einer Anzahl von Wärmeisoliereinheiten und der Spezifikationen der Wärmeisolierbox bei jeder Verteilungsstelle.

8. Verfahren nach Anspruch 4, wobei das Erfassen (101) der ursprünglichen Daten der Wärmeisoliereinheit in einem ursprünglichen Lager umfasst:
Identifizieren (301) des Strichcodes der Wärmeisolierbox und Bestimmen der Gewichtsinformationen der Wärmeisolierbox auf der Basis der Spezifikationen der Wärmeisolierbox, die dem Strichcode entsprechen;
Sammeln (302) von ursprünglichen Gewichtsinformationen der Wärmeisoliereinheit; und
Berechnen (303) der ursprünglichen Anzahl der Kältemitteleinheiten in der Wärmeisolierbox auf der Basis der ursprünglichen Gewichtsinformationen der Wärmeisoliereinheit und der Gewichtsinformationen der Wärmeisolierbox;
wobei das Berechnen (303) der ursprünglichen Anzahl der Kältemitteleinheiten in der Wärmeisolierbox auf der Basis der ursprünglichen Gewichtsinformationen der Wärmeisoliereinheit und der Gewichtsinformationen der Wärmeisolierbox umfasst:
Erfassen eines Typs einer benutzerkonfigurierten Kältemitteleinheit;
Bestimmen von Gewichtsinformationen der Kältemitteleinheit entsprechend dem Typ der Kältemitteleinheit auf der Basis des Typs der Kältemitteleinheit; und
Berechnen der Anzahl der Kältemitteleinheiten in der Wärmeisolierbox auf der Basis der Gewichtsinformationen der Wärmeisoliereinheit, der Gewichtsinformationen der Wärmeisolierbox und der Gewichtsinformationen der Kältemitteleinheit.

9. Verfahren nach einem der Ansprüche 1 bis 8, wobei das Verfahren ferner umfasst:
Erfassen (603) eines Temperaturwerts in der Wärmeisolierbox der Wärmeisoliereinheit in Echtzeit;
Erfassen (604) eines externen Temperaturwerts der Wärmeisoliereinheit in Echtzeit;
Berechnen (605) einer erforderlichen Anzahl der Kältemitteleinheiten in der Wärmeisoliereinheit auf der Basis des externen Temperaturwerts und des Temperaturwerts in der Wärmeisolierbox; und
Ausgeben (606) einer voreingestellten Aufforderungsnachricht zum Auffordern zum Erhöhen der Anzahl der Kältemitteleinheiten als Reaktion auf das Bestimmen, dass die erforderliche Anzahl der Kältemitteleinheiten größer ist als die Anzahl der Kältemitteleinheiten in den ursprünglichen Daten.

10. Vorrichtung zum Überwachen eines Umlaufvorgangs einer Wärmeisoliereinheit, wobei die Vorrichtung umfasst:
eine ursprüngliche Einheit (701), die zum Erfassen von ursprünglichen Daten der Wärmeisoliereinheit in einem ursprünglichen Lager ausgebildet ist, wobei die Wärmeisoliereinheit eine Wärmeisolierbox einer zusätzlichen Kältemitteleinheit ist und die ursprünglichen Daten umfassen: eine ursprüngliche Anzahl von Kältemitteleinheiten und einen Strichcode der Wärmeisolierbox;
eine Scaneinheit (702), die zum Erfassen von Scandaten der Wärmeisoliereinheit bei mindestens einer Versorgungsstelle, nachdem Waren in einer Reihenfolge der Wärmeisoliereinheit hinzugefügt worden sind, ausgebildet ist, wobei die Versorgungsstelle gemäß der Reihenfolge bestimmt wird und mit einer Kennzeichnung einer Versorgungsscanvorrichtung verbunden ist, und die Scandaten umfassen: den Strichcode der Wärmeisolierbox und die Kennzeichnung der Versorgungsscanvorrichtung;
eine Auslieferungseinheit (703), die zum Erfassen von Zwischendaten der Wärmeisoliereinheit bei mindestens einer Verteilungsstelle ausgebildet ist, nachdem bestimmt worden ist, dass die Waren aus der Wärmeisoliereinheit entnommen worden sind, wobei die Verteilungsstelle gemäß einer voreingestellten Dispositionsregel bestimmt wird und die Zwischendaten umfassen: eine Zwischenanzahl der Kältemitteleinheiten, eine Kennzeichnung einer Auslieferungsscanvorrichtung und den Strichcode der Wärmeisolierbox; und
eine Überwachungseinheit (704), die zum Bestimmen von Umlaufdaten der Wärmeisoliereinheit auf der Basis der ursprünglichen Daten, der Scandaten und der Zwischendaten ausgebildet ist, wobei die Umlaufdaten der Wärmeisoliereinheit Umsatzdaten der Wärmeisoliereinheit in dem Umlaufvorgang sind.

11. Vorrichtung nach Anspruch 10, ferner umfassend:
eine Wäge- und Scanvorrichtung (800), umfassend:
eine Wägeeinheit (801), die zum Messen des Gewichts der Wärmeisoliereinheit ausgebildet ist, wobei eine Oberfläche der Wärmeisolierbox mit dem Strichcode der Wärmeisolierbox ausgestattet ist;
eine Scaneinheit (802), die zum Identifizieren des Strichcodes der Wärmeisolierbox ausgebildet ist;
eine Berechnungseinheit (803), die zum Erfassen des Gewichts der Wärmeisolierbox, die dem Strichcode der Wärmeisolierbox entspricht, Berechnen einer ursprünglichen Anzahl der Kältemitteleinheiten auf der Basis des Gewichts der Wärmeisoliereinheit und des Gewichts der Wärmeisolierbox und Verwenden der ursprünglichen Anzahl der Kältemitteleinheiten und des Strichcodes der Wärmeisolierbox als ursprüngliche Daten der Wärmeisoliereinheit in einem ursprünglichen Lager ausgebildet ist; und
eine Fördereinheit (804), die zum Fördern der Wärmeisoliereinheit zu einem Verpackungsarbeitstisch als Reaktion auf das Erfassen der Wärmeisoliereinheit ausgebildet ist.

12. Verfahren nach einem der Ansprüche 1 bis 7, ferner umfassend:
Messen (901), als Reaktion auf das Erfassen der Wärmeisoliereinheit, durch eine Wägeeinheit, des Gewichts der Wärmeisoliereinheit, und wobei eine Oberfläche der Wärmeisolierbox mit dem Strichcode der Wärmeisolierbox ausgestattet ist;
Scannen (902), durch eine Scaneinheit, des Strichcodes der Wärmeisolierbox;
Erfassen (903) des Gewichts der Wärmeisolierbox, das dem Strichcode der Wärmeisolierbox entspricht;
Berechnen (904) einer ursprünglichen Anzahl der Kältemitteleinheiten auf der Basis des Gewichts der Wärmeisoliereinheit und des Gewichts der Wärmeisolierbox und Verwenden der ursprünglichen Anzahl der Kältemitteleinheiten und des Strichcodes der Wärmeisolierbox als ursprüngliche Daten der Wärmeisoliereinheit in dem ursprünglichen Lager; und
Fördern (905), durch eine Fördereinheit, der Wärmeisoliereinheit eines Verpackungsarbeitstischs.

13. Verfahren nach einem der Ansprüche 1 bis 9, wobei das ursprüngliche Lager (1000) umfasst: einen Versorgungsbereich (1001), einen Herstellungsbereich (1002) und einen Verteilungsbereich (1003), die aneinander angrenzen und durch eine Wärmeisolierbox-Förderlinie (a) verbunden sind; wobei
der Versorgungsbereich (1001) umfasst: die Wäge- und Scanvorrichtung (800) nach Anspruch 11, eine Wärmeisolierbox-Lagereinheit (1011), eine Kältemittel-Lagereinheit (1012) und einen Wägevorgangsbereich (1013); wobei der Wägevorgangsbereich (1013) an die Wäge- und Scanvorrichtung (800), die Wärmeisolierbox-Lagereinheit (1011) bzw. die Kältemittel-Lagereinheit (1012) angrenzt; und die Wäge- und Scanvorrichtung (800) an einen Eingang der Wärmeisolierbox-Förderlinie (a) angrenzt;
der Herstellungsbereich (1002) umfasst: ein Herstellungsbereich-Segment (a1) der Wärmeisolierbox-Förderlinie (a) und einen Verpackungsarbeitstisch (1022), der auf mindestens einer Seite des Herstellungsbereich-Segments (a1) angeordnet ist; und
der Verteilungsbereich (1003) umfasst: ein Verteilungsbereich-Segment (a2) der Wärmeisolierbox-Förderlinie (a) und einen Auslieferungsvorgangsbereich (1033) und eine Waren-Lagereinheit (1043), die auf mindestens einer Seite des Verteilungsbereich-Segments (a2) angeordnet sind.

14. Elektronische Vorrichtung, umfassend:
einen oder mehrere Prozessor(en); und
eine Speichervorrichtung, auf der ein oder mehrere Programm(e) gespeichert ist/sind,
wobei das eine oder die mehreren Programm(e), wenn es/sie durch den einen oder die mehreren Prozessor(en) ausgeführt wird/werden, bewirkt/bewirken, dass der eine oder die mehreren Prozessor(en) das Verfahren nach einem der Ansprüche 1 bis 9 implementiert/implementieren.

15. Computerlesbares Medium, auf dem ein Computerprogramm gespeichert ist, wobei das Programm, wenn es durch einen Prozessor ausgeführt wird, das Verfahren nach einem der Ansprüche 1 bis 9 implementiert.

## Revendications

1. Procédé de surveillance d'un processus de circulation d'une unité d'isolation thermique, le procédé comportant :
l'acquisition (101) de données initiales de l'unité d'isolation thermique dans un entrepôt initial, dans lequel l'unité d'isolation thermique est un boîtier d'isolation thermique d'une unité de réfrigérant supplémentaire et les données initiales comportent : un nombre initial d'unités de réfrigérant et un code-barres du boîtier d'isolation thermique ;
l'acquisition (102) de données de scannage de l'unité d'isolation thermique au niveau d'au moins un site d'apport après que des marchandises dans une commande ont été ajoutées à l'unité d'isolation thermique, dans lequel le site d'apport est déterminé en fonction de la commande et est lié à un ID d'un dispositif de scannage d'apport et les données de scannage comportent : le code-barres du boîtier d'isolation thermique et l'ID du dispositif de scannage d'apport ;
l'acquisition (103) de données intermédiaires de l'unité d'isolation thermique au niveau d'au moins un site de distribution après qu'il a été déterminé que les marchandises ont été extraites de l'unité d'isolation thermique, dans lequel le site de distribution est déterminé en fonction d'une règle de planification prédéfinie et les données intermédiaires comportent : un nombre intermédiaire des unités de réfrigérant, un ID d'un dispositif de scannage de livraison et le code-barres du boîtier d'isolation thermique ; et
la détermination (104) de données de circulation de l'unité d'isolation thermique sur la base des données initiales, des données de scannage et des données intermédiaires, les données de circulation de l'unité d'isolation thermique étant des données de roulement de l'unité d'isolation thermique dans le processus de circulation.

2. Procédé selon la revendication 1, dans lequel le procédé comporte en outre :
l'acquisition (504) de données de destination de l'unité d'isolation thermique, en réponse à la détermination que l'unité d'isolation thermique arrive à un entrepôt de destination, les données de destination comportant : un nombre de destination des unités de réfrigérant et le code-barres du boîtier d'isolation thermique ; et
la détermination (104) de données de circulation de l'unité d'isolation thermique sur la base des données initiales, des données de scannage et des données intermédiaires comportant : la détermination des données de circulation de l'unité d'isolation thermique sur la base des données initiales, des données de scannage, des données intermédiaires et des données de destination.

3. Procédé selon la revendication 1 ou 2, dans lequel le procédé comporte en outre :
la détermination (405) de si l'unité d'isolation thermique circule normalement sur la base des données de circulation.

4. Procédé selon la revendication 2, dans lequel l'acquisition (504) de données de destination de l'unité d'isolation thermique comporte :
l'identification (301) du code-barres du boîtier d'isolation thermique de l'unité d'isolation thermique et la détermination des informations de poids du boîtier d'isolation thermique sur la base des spécifications du boîtier d'isolation thermique correspondant au code-barres ;
la collecte (302) d'informations de poids de destination de l'unité d'isolation thermique ; et
le calcul (303) du nombre de destination des unités de réfrigérant dans le boîtier d'isolation thermique sur la base des informations de poids de destination de l'unité d'isolation thermique et des informations de poids du boîtier d'isolation thermique.

5. Procédé selon la revendication 3, dans lequel la détermination (405) de si l'unité d'isolation thermique circule normalement sur la base des données de circulation comporte :
la détermination pour savoir si le nombre initial des unités de réfrigérant, le nombre intermédiaire des unités de réfrigérant et le nombre de destination des unités de réfrigérant dans les données de circulation sont cohérents ; et
la détermination que l'unité d'isolation thermique circule normalement lorsque le nombre initial des unités de réfrigérant, le nombre intermédiaire des unités de réfrigérant et le nombre de destination des unités de réfrigérant dans les données de circulation sont cohérents.

6. Procédé selon la revendication 1, dans lequel les données de circulation comportent :
des informations de statut d'inventaire de l'unité d'isolation thermique dans l'entrepôt initial, tous les sites d'apport et tous les sites de distribution ; et
la détermination des données de circulation de l'unité d'isolation thermique sur la base des données initiales, des données de scannage et des données intermédiaires comporte :
la détermination (201) des informations de statut d'inventaire de l'unité d'isolation thermique dans l'entrepôt initial sur la base des données initiales ;
la détermination (202), sur la base de données de scannage, d'informations de statut d'inventaire de l'unité d'isolation thermique au niveau d'un site d'apport correspondant à chaque donnée parmi les données de scannage ; et
la détermination (203) d'informations de statut d'inventaire de l'unité d'isolation thermique au niveau de chaque site de distribution sur la base des données intermédiaires.

7. Procédé selon l'une quelconque des revendications 1 à 6, dans lequel la règle de planification prédéfinie comporte : l'envoi d'un véhicule correspondant sur chaque site de distribution et la réalisation de trajets différents pour différents véhicules sur la base d'un nombre d'unités d'isolation thermique et des spécifications du boîtier d'isolation thermique au niveau de chaque site de distribution.

8. Procédé selon la revendication 4, dans lequel l'acquisition (101) de données initiales de l'unité d'isolation thermique dans un entrepôt initial comporte :
l'identification (301) du code-barres du boîtier d'isolation thermique et la détermination des informations de poids du boîtier d'isolation thermique sur la base des spécifications du boîtier d'isolation thermique correspondant au code-barres ;
la collecte (302) d'informations de poids initiales de l'unité d'isolation thermique ; et
le calcul (303) du nombre initial des unités de réfrigérant dans le boîtier d'isolation thermique sur la base des informations de poids initiales de l'unité d'isolation thermique et des informations de poids du boîtier d'isolation thermique ;
dans lequel le calcul (303) du nombre initial des unités de réfrigérant dans le boîtier d'isolation thermique sur la base des informations de poids initiales de l'unité d'isolation thermique et des informations de poids du boîtier d'isolation thermique comporte :
l'acquisition du type d'une unité de réfrigérant configurée par l'utilisateur ;
la détermination d'informations de poids de l'unité de réfrigérant correspondant au type de l'unité de réfrigérant sur la base du type de l'unité de réfrigérant ; et
le calcul du nombre des unités de réfrigérant dans le boîtier d'isolation thermique sur la base des informations de poids de l'unité d'isolation thermique, des informations de poids du boîtier d'isolation thermique et des informations de poids de l'unité de réfrigérant.

9. Procédé selon l'une quelconque des revendications 1 à 8, dans lequel le procédé comporte en outre :
l'acquisition (603) d'une valeur de température dans le boîtier d'isolation thermique de l'unité d'isolation thermique en temps réel ;
l'acquisition (604) d'une valeur de température externe de l'unité d'isolation thermique en temps réel ;
le calcul (605) d'un nombre requis des unités de réfrigérant dans l'unité d'isolation thermique sur la base de la valeur de température externe et de la valeur de température dans le boîtier d'isolation thermique ; et
la transmission (606) d'un message d'invite prédéfini pour inviter à augmenter le nombre des unités de réfrigérant, en réponse à la détermination que le nombre requis des unités de réfrigérant est supérieur au nombre des unités de réfrigérant dans les données initiales.

10. Appareil permettant de surveiller un processus de circulation d'une unité d'isolation thermique, l'appareil comportant :
une unité initiale (701) configurée pour acquérir des données initiales de l'unité d'isolation thermique dans un entrepôt initial, dans lequel l'unité d'isolation thermique est un boîtier d'isolation thermique d'une unité de réfrigérant supplémentaire et les données initiales comportent : un nombre initial d'unités de réfrigérant et un code-barres du boîtier d'isolation thermique ;
une unité de scannage (702) configurée pour acquérir des données de scannage de l'unité d'isolation thermique au niveau d'au moins un site d'apport après que les marchandises dans une commande ont été ajoutées à l'unité d'isolation thermique, dans lequel le site d'apport est déterminé en fonction de la commande et est lié à un ID d'un dispositif de scannage d'apport et les données de scannage comportent : le code-barres du boîtier d'isolation thermique et l'ID du dispositif de scannage d'apport ;
une unité de livraison (703) configurée pour acquérir des données intermédiaires de l'unité d'isolation thermique au niveau d'au moins un site de distribution après qu'il a été déterminé que les marchandises ont été extraites de l'unité d'isolation thermique, dans lequel le site de distribution est déterminé en fonction d'une règle de planification prédéfinie et les données intermédiaires comportent : un nombre intermédiaire des unités de réfrigérant, un ID d'un dispositif de scannage de livraison et le code-barres du boîtier d'isolation thermique ; et
une unité de surveillance (704) configurée pour déterminer des données de circulation de l'unité d'isolation thermique sur la base des données initiales, des données de scannage et des données intermédiaires, les données de circulation de l'unité d'isolation thermique étant des données de roulement de l'unité d'isolation thermique dans le processus de circulation.

11. Appareil selon la revendication 10, comportant en outre :
un appareil de pesage et de scannage (800) comportant :
une unité de pesage (801) configurée pour mesurer le poids de l'unité d'isolation thermique, dans lequel une surface du boîtier d'isolation thermique est pourvue du code-barres du boîtier d'isolation thermique ;
une unité de scannage (802) configurée pour identifier le code-barres du boîtier d'isolation thermique ;
une unité de calcul (803) configurée pour acquérir le poids du boîtier d'isolation thermique correspondant au code-barres du boîtier d'isolation thermique, calculer un nombre initial des unités de réfrigérant sur la base du poids de l'unité d'isolation thermique et du poids du boîtier d'isolation thermique et utiliser le nombre initial des unités de réfrigérant et le code-barres du boîtier d'isolation thermique en tant que données initiales de l'unité d'isolation thermique dans un entrepôt initial ; et
une unité de convoyage (804) configurée pour convoyer l'unité d'isolation thermique vers un atelier de conditionnement en réponse à la détection de l'unité d'isolation thermique.

12. Procédé selon l'une quelconque des revendications 1 à 7, comportant en outre :
la mesure (901), en réponse à la détection de l'unité d'isolation thermique, par une unité de pesage, du poids de l'unité d'isolation thermique, et une surface du boîtier d'isolation thermique est pourvue du code-barres du boîtier d'isolation thermique ;
le scannage (902), par une unité de scannage, du code-barres du boîtier d'isolation thermique ;
l'acquisition (903) du poids du boîtier d'isolation thermique correspondant au code-barres du boîtier d'isolation thermique ;
le calcul (904) d'un nombre initial des unités de réfrigérant sur la base du poids de l'unité d'isolation thermique et du poids du boîtier d'isolation thermique et l'utilisation du nombre initial des unités de réfrigérant et du code-barres du boîtier d'isolation thermique en tant que données initiales de l'unité d'isolation thermique dans l'entrepôt initial ; et
le convoyage (905), par une unité de convoyage, de l'unité d'isolation thermique vers un atelier de conditionnement.

13. Procédé selon l'une quelconque des revendications 1 à 9, dans lequel l'entrepôt initial (1000) comporte : une région d'apport (1001), une région de production (1002) et une région de distribution (1003) qui sont séquentiellement adjacentes et sont en communication via une ligne de convoyage de boîtier d'isolation thermique (a) ; dans lequel
la région d'apport (1001) comporte : l'appareil de pesage et de scannage (800) selon la revendication 11, une unité de stockage de boîtier d'isolation thermique (1011), une unité de stockage de réfrigérant (1012) et une région d'opération de pesage (1013) ; la région d'opération de pesage (1013) est respectivement adjacente à l'appareil de pesage et de scannage (800), à l'unité de stockage de boîtier d'isolation thermique (1011) et à l'unité de stockage de réfrigérant (1012) ; et l'appareil de pesage et de scannage (800) est adjacent à une admission de la ligne de convoyage de boîtier d'isolation thermique (a) ;
la région de production (1002) comporte : un segment de région de production (a1) de la ligne de convoyage de boîtier d'isolation thermique (a) et un atelier de conditionnement (1022) agencé sur au moins un côté du segment de région de production (a1) ; et
la région de distribution (1003) comporte : un segment de région de distribution (a2) de la ligne de convoyage de boîtier d'isolation thermique (a) et une région d'opération de livraison (1003) et une unité de stockage de marchandises (1043) agencées sur au moins un côté du segment de région de distribution (a2).

14. Dispositif électronique comportant :
un ou plusieurs processeurs ; et
un appareil de stockage stockant un ou plusieurs programmes,
le ou les programmes, lorsqu'ils sont exécutés par le ou les processeurs, amenant le ou les processeurs à implémenter le procédé selon l'une quelconque des revendications 1 à 9.

15. Support lisible par ordinateur, stockant un programme informatique, dans lequel le programme, lorsqu'il est exécuté par un processeur, implémente le procédé selon l'une quelconque des revendications 1 à 9.
